(19) Europäisches Patentamt
European Patent Office
Office européen des brevets

(11) **EP 0 936 868 B1**

(12) **EUROPÄISCHE PATENTSCHRIFT**

(45) Veröffentlichungstag und Bekanntmachung des Hinweises auf die Patenterteilung:
**23.08.2000 Patentblatt 2000/34**

(51) Int Cl.[7]: **A21D 13/00**, A21D 8/06

(21) Anmeldenummer: **97948683.4**

(86) Internationale Anmeldenummer:
**PCT/DE97/02510**

(22) Anmeldetag: **29.10.1997**

(87) Internationale Veröffentlichungsnummer:
**WO 98/19548 (14.05.1998 Gazette 1998/19)**

(54) **VERFAHREN ZUR HERSTELLUNG EINES EINWEGBEHÄLTNISSES UND PRESSFORM ZUR DURCHFÜHRUNG DES VERFAHRENS**

METHOD FOR PRODUCING A ONE-WAY CONTAINER, AND MOULD NEEDED FOR THE APPLICATION

MODE DE FABRICATION D'UN CONTENEUR NON RETOUR ET MOULE REQUIS POUR LE PROCEDE

(84) Benannte Vertragsstaaten:
**AT BE CH DK FR GB LI NL**

(30) Priorität: **01.11.1996 DE 19646752**

(43) Veröffentlichungstag der Anmeldung:
**25.08.1999 Patentblatt 1999/34**

(73) Patentinhaber: **Thiele, Marion**
**01277 Dresden (DE)**

(72) Erfinder:
• **Thiele, Marion**
**01277 Dresden (DE)**
• **Linke, Wolfgang**
**01277 Dresden (DE)**

(74) Vertreter: **Adler, Peter, Dipl.-Ing. et al**
**Patentanwälte**
**Lippert, Stachow, Schmidt & Partner**
**Krenkelstrasse 3**
**01309 Dresden (DE)**

(56) Entgegenhaltungen:
EP-A- 0 556 774       DE-A- 4 239 143
GB-A- 2 147 790       US-A- 5 304 386

**Beschreibung**

Die Erfindung betrifft ein Verfahren zur Herstellung eines Einwegbehältnisses aus unter Verwendung von Getreidemehl hergestelltem Teig, der geformt und anschließend gebacken wird und eine Preßform zur Durchführung des Verfahrens.

Sehr häufig werden Speisen in Einwegbehältnissen oder sogenanntem Einweggeschirr bereitgestellt. Insbesondere für Speisen, die zum schnellen Verzehr bestimmt sind, wird somit der Aufwand zur Reinigung des Geschirrs vermieden.

So sind seit langem Geschirrteile aus Pappe bekannt. Allerdings würde der reine Einsatz von Pappe zu einem sehr schnellen Durchweichen des Einweggeschirrs beziehungsweise des Einwegbehälters und zur schnellen Unbrauchbarkeit desselben führen. Aus diesem Grunde werden derartige Geschirrteile zumeist mit einer wasserundurchdringlichen Beschichtung versehen.

Der Nachteil des Aufweichens wird mit Geschirrteilen aus Kunststoff vollkommen vermieden.

Allerdings haben diese Arten von Einweggeschirr den Nachteil, daß Sie eine erhebliche Umweltbelastung mit sich bringen, da sie nur schwer oder gar nicht verrotten.

Zur Vermeidung dieses Nachteiles ist aus der deutschen Offenlegungsschrift DE 42 35 033 A1 ein verzehrbarer Einwegteller und ein Verfahren zum Herstellen des Einwegtellers bekannt. Dabei wird angegeben, daß dieser Einwegteller aus einem Brotteig durch Bakken hergestellt wird. Der Brotteig enthält einen nicht näher genannten Roggenmehlanteil. Zur Herstellung der Behälterform sind auf einem Backblech Formkerne vorgesehen, über die der Brotteig beim Backen gezogen wird. Anschließend wird der Brotteig ohne eine weitere Formung der Außenkontur gebacken und erhält somit eine unregelmäßige Außenform. Werden mehrere nebeneinanderliegende Behälter auf diese Art und Weise hergestellt, so sind Einstiche oder Einschnitte zwischen den Behältern vorgesehen, die ein Trennen durch den Verbraucher ermöglichen.

Nach dem Backen können die Behälter umgedreht werden, so daß die durch die Formkerne gebildete Ausformung die Aufnahmeaushöhlung des Behälters bilden.

Derartige aus Brotteig hergestellte Behälter können zur kurzzeitigen Bereitstellung von Speisen dienen. Hierbei sind sie insbesondere zum menschlichen Verzehr geeignet, können jedoch auch als Viehfutter entsorgt werden, wenn der Verzehr nicht erfolgt ist. Problematisch ist allerdings die längere Aufbewahrung von Speisen in derartigen Behältern, da bereits nach kurzer Zeit ein Durchweichen zu erwarten sein wird. Außerdem weisen derartige Behälter eine recht voluminöse Außenform auf, so daß sie für den massenhaften Verbrauch ungeeignet erscheinen.

In der deutschen Patentschrift 42 39 143 C2 wird ebenfalls ein eßbarer Behälter angegeben, dessen vorwiegende Aufgabe jedoch darin besteht, die insbesondere zum Speiseeisverzehr vorgesehenen Behältnisse direkt beim Speiseeisverkäufer in der endgültigen Form auszuformen, um somit einen Transport vorgefertigter Eisbehälter zu vermeiden, der regelmäßig in Folge der hohen Brüchigkeit zu erheblichen Verlusten führt. Hierzu werden in einem ersten Erwärmungs- und Ausbackschritt in Form eines Waffelgebäcks Behälter hergestellt. Diese werden sodann wiederbefeuchtet und verpackt. Infolge der Wiederbefeuchtung werden diese Blätter weich und problemlos transportfähig. Beim Endverbraucher können sodann diese Blätter entnommen und nach einem erneuten Erwärmungsschritt ausgetrocknet und schließlich in die endgültige Form umgeformt werden. Derartige Behälter haben infolge der erforderlichen Teigzusammensetzung nach dem Einbringen von Speiseeis eine Standfestigkeit von mehreren Minuten, was regelmäßig beim Speiseeisverzehr ausreichend ist. Eine Verwendung derartiger eßbarer Behälter für die Bereitstellung anderer Speisen insbesondere über längere Zeiträume ist allerdings nicht möglich.

Aus der deutschen Offenlegungsschrift 41 06 376 A1 ist ebenfalls ein als eßbares Geschirr verwendbares Hohlgebäck bekannt. Hierbei wird ein Teig in einer Formkammer in einem Erwärmungsschritt vorgeformt. Anschließend wird dieser Teig offen ausgebacken. Hierbei wird davon ausgegangen, daß ein gärender Backteig Verwendung findet, der nach einem Vergärprozeß im Backvorgang die Formkammer vollständig ausfüllt.

Um derartige Behälter in Massenproduktion herzustellen, scheinen die zwei notwendigen Schritte der Erwärmung und des anschließenden offenen Bakkens einen erheblichen Aufwand mit sich zu bringen. Andererseits zeigt der gärende Teig eine relativ geringe Langzeitstabilität beim Einbringen in Speisen, da in die verbleibenden Gaseinschlüsse die in den Speisen enthaltene Feuchtigkeit relativ leicht einbringen und damit den Behälter von innen her aufweichen kann.

Schließlich ist aus der deutschen Offenlegungsschrift 42 21 018 A1 ein Einwegbehältnis, vorzugsweise in Form einer Schale bekannt, das unter Verwendung von aus Getreidemehl und Wasser hergestelltem Teig, der geformt und anschließend gebacken oder getrocknet wird, hergestellt wird.

Dieses bekannte Verfahren sieht vor, daß der Teig unter Verwendung von Lauge als Flüssigkeitsanteil hergestellt wird. Dabei wird eine Eigenschaft der Lauge genutzt, die bewirkt, daß das in der Trockensubstanz, beispielsweise in dem Mehl, enthaltene Eiweiß mit der Lauge koaguliert. Durch die dementsprechende Eiweißgerinnung bildet sich ein Netz, welches durch die im Teig noch vorhandenen Füllstoffe, wie Stärke, Zellulose und dergleichen ausgefüllt wird. Durch dieses Verfahren ergeben sich Verfahrensprodukte mit lederartiger Konsistenz, die eine gute Dichtheit und Standfestigkeit gegen Aufweichen besitzen.

Nachteilig ist bei diesem Verfahren, daß zur sicheren Herstellung stets ein ausreichender Anteil an koagulierbarem Eiweiß vorhanden sein muß. So werden in der deutschen Offenlegungsschrift 42 21 018 A1 Eiweißanteile von 10 bis 20% der Trockensubstanz angegeben.

Um zu einem derart hohen Eiweißanteil zu gelangen, besteht eine erste Möglichkeit darin, Weizenmehl von hoher Reinheit einzusetzen. Weizenmehl hat einen Eiweißanteil von 11,2 Masse - %. Roggenmehl dagegen beispielsweise nur 7,5 Masse - %. Es kann auch aus Getreidemehl separiertes Eiweiß dem Teig hinzugefügt werden. Der erste Fall zeigt, daß Teig, in dem nur Weizenmehl eingesetzt wird, beim Kneten schwer von der Unterlage zu lösen ist. Derartiger Teig bringt somit erhebliche Verarbeitungsschwierigkeiten mit sich, was insbesondere bei der Massenproduktion nachteilbehaftet ist.

Der zweiten Möglichkeit, daß heißt, dem Hinzufügen von Eiweiß, haftet der Nachteil an, daß diese Eiweißergänzung einen zusätzlichen Kostenaufwand bedeutet.

Der Erfindung liegt dementsprechend die Aufgabe zugrunde, die Herstellung von biologisch verwertbaren Einwegbehältnissen bei einer guten Verarbeitbarkeit kostengünstig zu gestalten.

Gemäß der Erfindung wird die Aufgabe dadurch gelöst, daß der Teig als Festteig ausgebildet ist. Dabei wird dieser Festteig

- mit einem Wassermasseanteil A von

$$A_{min} = 30\% \leq A \leq 35\% = A_{max},$$

- mit einem Masseanteil B einer Getreidemehlmischung aus Weizen- und Roggenmehl, für den gilt $B \approx 50\%$, wobei sich darin ein Masseanteil $B_W$ an Weizenmehl und ein Masseanteil $B_R$ an Roggenmehl zueinander verhält wie $1\% \leq B_W \leq 49\%$ und $B_R = 50\% - B_W$

- mit einem Masseanteil C an Mehl aus zerkleinertem getrockneten Backwerk, wie Semmelmehl, für den gilt $C \approx 10\%$, und

- mit einem Masseanteil D an Pflanzenöl, für den gilt $D \approx A_{max} - A + 5\%$,

geknetet wird. Aus diesem gekneteten Festteig wird ein Teigrohling in eine Preßform eingebracht und in dieser Preßform gebacken.

Der Roggenmehlanteil in diesem Teig bewirkt, daß er sich beim Knetprozeß und auch beim Einbringen in die Preßform sehr leicht von der Unterlage lösen läßt. Durch den relativ geringen Wasseranteil wird vermieden, daß es zu keiner starken Dampfentwicklung innerhalb der Preßform kommt, die regelmäßig zu einer Strukturveränderung des Einwegbehältnisses infolge des Bestrebens zum Austritt aus der Preßform bewirken würde. Schließlich sorgt der Ölanteil für eine geschmeidige Verarbeitbarkeit trotz des relativ geringen Wasseranteils in dem Festteig.

In einer Ausführungsform der Erfindung ist vorgesehen, daß dem Teig Geschmacks- und/oder Farbstoffe zugesetzt werden.

Durch die Hinzufügung von Farbstoffen kann das Einwegbehältnis den jeweiligen ästhetischen Anforderungen angepaßt werden. So besteht beispielsweise die Möglichkeit der Blaufärbung durch Heidelbeerfarbe oder Holundersaft, der Gelbfärbung durch Safran, der Grünfärbung durch Spinat usw. Auch eine Beeinflussung des Geschmacks durch Geschmacksstoffe kann zweckmäßig sein, wenn nicht nur die Verrottbarkeit oder die Möglichkeit der Zufuhr des Einweggeschirrs zur Tierfutterverwertung sondern auch der tatsächliche Verzehr beabsichtigt ist. Hierzu ist beispielsweise die Beifügung von Kochsalz, Knoblauchsaft oder -granulat möglich. Paprika würde sowohl eine Farb- als auch eine Geschmacksbeeinflussung ermöglichen.

In einer weiteren Ausführungsform der Erfindung ist vorgesehen, daß der Masseanteil $B_W$ an Weizenmehl und der Masseanteil $B_R$ an Roggenmehl annähernd gleich sind.

Durch eine derartige Zusammensetzung des Getreidemehlanteiles wird eine besonders gute Verarbeitbarkeit und hierbei insbesondere ein gutes Lösen des Teiges von einer Unterlage erreicht.

In einer weiteren Ausführungsform der Erfindung ist vorgesehen, daß die Masseanteile an dem Teig folgende Größen aufweisen:

A = 34,9%
$B_W = B_R = 24,9\%$
C = 10%
D = 5%
und einen Masseanteil E an Kochsalz von 0,3%.

Derartige Masseanteile bewirken einen geschmeidig knetbaren und gut von der Unterlage lösbaren und somit zur Massenproduktion geeigneten Festteig.

In einer weiteren Ausführungsform des erfindungsgemäßen Verfahrens ist vorgesehen, daß der Teigrohling als Teigplatte geformt und ein Teil dieser Teigplatte in die Preßform gegeben wird. Hierbei kön- nen unterschiedlichste Formen von Einwegbehältnis- sen hergestellt werden, wobei der bei dem Teilen oder Ausstanzen der Teigplattenteile anfallende Überstand stets wiederverwendet werden kann, in dem er bei neuem Teigansatz untergeknetet wird.

Im übrigen kann auch bei der Herstellung anfallender bereits gebackener Überstand oder zerbrochene Einwegbehältnisse in den Herstellungsprozeß zurückgeführt werden, in dem diese zermahlen und als Mehl dem Teig entsprechend dem Anteil C zugesetzt werden.

Eine andere Möglichkeit besteht darin, den Teigrohling als Teigkugel zu formen und diese Teigkugel in die Preßform zu geben, wobei durch Zusammenfügen der Preßform die Form des Teigrohlings entsprechend dem herzustellenden Einwegbehältnisses geformt wird.

Besonders zweckmäßig ist es, daß der Preßdruck in der Preßform während des gesamten Backvorganges konstant gehalten wird. Dies bedingt, daß die Preßform in sich nachgiebig ist, da der Teig während des Backvorganges eine Volumenvergrößerung erfährt, die bei einer starren Preßform zu einer Druckerhöhung führen würde. Durch den konstanten Preßdruck wird jedoch erreicht, daß einerseits die Form erzwungen wird, andererseits jedoch das Wasser in Form von Wasserdampf austreten kann, ohne die Struktur des Einwegbehältnisses zu stören.

Hierbei ist es besonders vorteilhaft, daß die Preßform durch Schwerkraft gepreßt wird. Die Schwerkraft stellt sodann die konstante Preßkraft ein, wodurch sich die geschilderten Vorteile ergeben.

Eine Möglichkeit besteht darin, die mit Teig gefüllte Preßform in einen Umluftherd zu geben und bei annähernd 200°C 20 bis 30 Minuten zu backen. Infolge dieses Backvorganges entsteht ein als Einwegbehältnis geeignetes Backwerk von leicht bräunlicher Farbe, welches nach einer kurzen Abkühlzeit von wenigen Sekunden aus der Preßform entnommen werden kann.

Eine andere Möglichkeit der Einleitung des Backvorganges besteht darin, daß die Preßform direkt beheizt wird und damit ein stattfindender Kontaktbackvorgang 2 bis 6 Minuten durchgeführt wird. Der Vorteil dieses Backverfahrens liegt in der relativ kurzen Backzeit. Damit ist eine kostengünstige Massenfertigung möglich.

In einer Ausgestaltung des erfindungsgemäßen Verfahrens ist vorgesehen, daß unter Verwendung einer mikrowellenfesten Preßform die mit Teig gefüllte Preßform zum Backen oder zur Unterstützung des Backprozesses einer Mikrowellenstrahlung ausgesetzt wird.

Durch die Mikrowellenstrahlung kann eine Unterstützung des Wärmebackprozesses ermöglicht werden. Damit kann der Backvorgang schneller ablaufen, wodurch die Produktivität erhöht werden kann.

Durch die Mikrowellenstrahlung kann außerdem eine äußere Bräunung infolge des Wärmeeinflusses verringert - im Falle des alleinigen Mikrowellenbakkens sogar vollständig verhindert werden. Damit ist es möglich, eine weitgehend helle Farbe des Einwegbehältnisses einzustellen. Auch die farbliche Gestaltung von Einwegbehältnissen wird auf diese Art verbessert, da eine die Farbe verfälschende Braunfärbung im wesentlichen vermieden werden kann.

In einer weiteren Variante des erfindungsgemäßen Verfahrens ist vorgesehen, das Einwegbehältnis nach dem Backvorgang mit einer wasserabweisenden Beschichtung zu versehen. Zwar ist bei dem erfindungsgemäßen Einwegbehältnis eine Durchfeuchtung bei flüssigem Inhalt erst sehr spät, d.h. erst nach mehreren Stunden zu verzeichnen, aber mit der wasserabweisenden Beschichtung kann diese Zeit erheblich verlängert werden. Dadurch wird es möglich, Speisen über längere Zeiträume in dem Einwegbehältnis aufzubewahren, beispielsweise in den Handel zu bringen.

Auch kann damit die bedingte Mikrowelleneignung des Einwegbehältnisses dahingehend genutzt werden, daß Fertigspeisen gleich in dem Einwegbehältnis aufbewahrt und in diesem bei Bedarf mittels Mikrowellenstrahlung erwärmt werden können. Hierin ist beispielsweise ein Einsatz bei der Bordverpflegung von Flugpassagieren zu sehen.

Die erfindungsgemäße Aufgabenstellung wird auch durch eine Preßform zur Durchführung des Verfahrens gelöst, die durch eine eine Inversform der Unterseite des Einwegbehältnisses aufweisende Unterform und eine eine Inversform der Oberseite des Einwegbehältnisses aufweisende Oberform gekennzeichnet ist. Die Oberform ist unter Zwischenlegen des Teigrohlings auf die Unterform auflegbar. Die Unterform weist zumindest in einem randfernen Innenbereich Dampfaustrittsöffnungen auf. Durch diese Preßform wird der Teigrohling in seine endgültige Form gezwungen. Dabei besteht die Möglichkeit, daß bei dem Backvorgang auftretender Wasserdampf durch die Dampfaustrittsöffnungen nach außen entweichen kann. Hierbei ist es erforderlich, daß zumindest in dem Innenbereich diese Dampfaustrittsöffnungen vorgesehen werden, da im Randbereich durch den Rand der Preßform die Möglichkeit des Dampfaustrittes besteht. Die Oberform wird in aller Regel glatt, daß heißt also ohne Dampfaustrittsöffnungen gestaltet, um die Oberflächenstruktur des Einwegbehältnisses auf der Innenseite glatt gestalten zu können.

Es ist zweckmäßig, für die Oberform ein Beschwerungsstück vorzusehen, das mindestens das fünffache Gewicht der Oberform aufweist. Mittels eines derartigen Beschwerungsstückes wird eine hinreichende Preßkraft infolge der Gewichtskraft des Beschwerungsstückes erzielt.

Die Erfindung soll nachfolgend anhand eines Ausführungsbeispieles näher erläutert werden. In den zugehörigen Zeichnungen zeigt

Fig. 1 eine Teigplatte

Fig. 2 eine Ausstechform

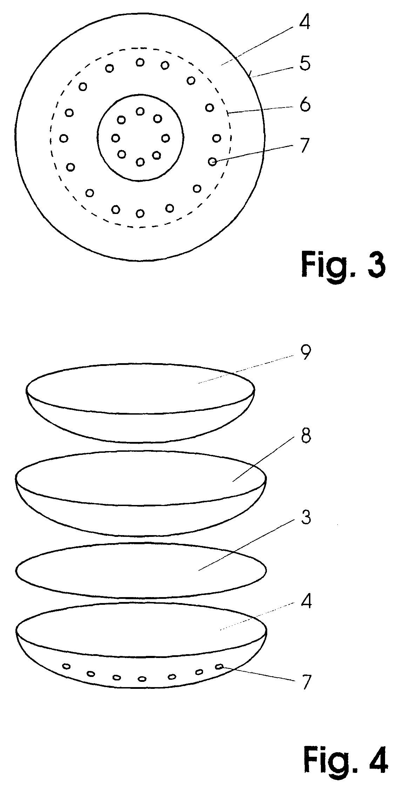

Fig. 3 eine Unterform einer erfindungsgemäßen Preßform

Fig. 4 eine Explosivdarstellung einer mit Teigstück und Beschwerungsstück versehenen Preßform.

Mit folgender Rezeptform wird ein Festteig geknetet:

    0,500 kg Weizenmehl
    0,500 kg Roggenmehl
    0,200 kg Semmelmehl
    0,7 l Wasser
    0,100 kg Öl
    0,050 kg Salz.

Mehl wird in verschiedenen Mehltypen einklassifiziert. Diese Mehltypen ihrerseits beeinflussen die Farbe des Endproduktes. Zweckmäßig ist es, Weizenmehl vom Typ T 405 oder 505 und Roggenmehl vom Typ T 997 zu verwenden.

Dieser Teig wird nach dem Knetvorgang zu einem als Teigplatte 1 ausgeformten Teigrohling gewalzt. Mittels einer Ausstechform 2 werden aus der Teigplatte 1 Teigplattenteile 3 ausgestanzt. Diese Teigplattenteile 3 entsprechen der Form des herzustellenden Einwegbehältnisses. Dabei bieten sich grundsätzlich runde Teigplattenteile für Teller und Schüsseln und dergleichen, ovale Teigplattenteile für ovale Schalen oder Schalen mit Griffen an. Auch sind rechteckige Teigplattenteile für eckige Behältnisse möglich.

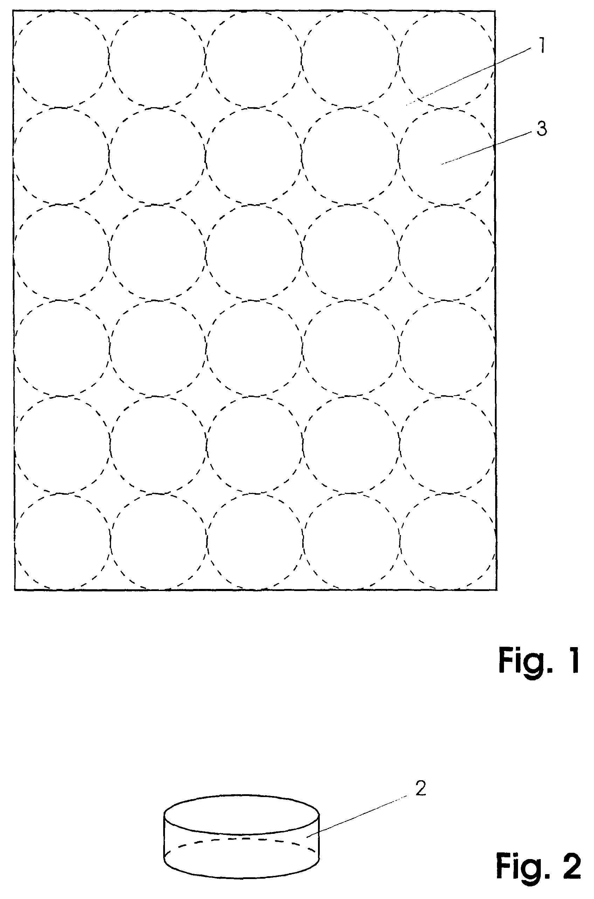

Wie in Fig. 2 dargestellt, ist eine Unterform 4 vorgesehen. Diese Unterform 4 weist in ihrem von Rand 5 entfernten Innenbereich 6 Dampfaustrittsöffnungen 7 auf.

In diese Unterform 4 wird das Teigplattenteil 3 eingelegt und mit einer Oberform 8 in die Innenkontur der Unterform 4 gedrückt. Anschließend wird ein Beschwerungsstück 9 auf die Oberform 8 aufgelegt. Mit diesem Beschwerungsstück, welches sogleich auch infolge seiner Gewichtskraft die Preßkraft einstellt, wird die Form in einen Umluftherd gegeben und dort bei ca. 200° C 20 bis 30 Minuten gebacken. Das Ergebnis ist eine der Innenkonturen der Unterform und der Oberform folgendes Einwegbehältnis, welches eine leicht bräunliche Färbung aufweist. Entsprechend der Oberflächengüte der Unterseite der Oberform 8 kann die Innenseite des Einwegbehältnisses sogar eine seitenmatte oder glänzende Oberflächenstruktur aufweisen.

Grundsätzlich beeinflussen die Materialien der Unter- und der Oberform das Aussehen des fertigen Einwegbehältnisses. Aus diesem Grunde und aus Gründen der Nahrungsmittelhygiene ist es zweckmäßig, für die Formteile nichtrostenden Stahl zu verwenden. Derartiges Material bietet außerdem die Möglichkeit, daß sich das fertige Backwerk nach dem Backprozeß problemlos aus der Form stoßen läßt.

Hierfür ist auch der Einsatz einer Antihaftbeschichtung auf der Ober- und/oder Unterform 8, 4 ist möglich und zweckmäßig.

Das Beschwerungsstück kommt mit dem Einwegbehältnis, welches letztendlich ja ein Nahrungsmittel darstellt, nicht in Berührung, weshalb es aus einfachen Gußmaterial hergestellt werden kann.

Durch das Beschwerungsstück wird erreicht, daß sich das über die Preßform vorgeformte Teigplattenteil 3 nicht verformt. Der Teig, welcher ohne eigentliche Treibmittel, wie Backpulver oder Hefe hergestellt wird, würde nämlich bei einem normalen Backvorgang trotzdem Treibprozesse durch die Bestandteile Mehl, Öl und Wasser und das Semmelmehl aufweisen. Durch den Preßdruck von dem Beschwerungsstück 9 wird der Teig so zusammengehalten, daß keinerlei Blasen entstehen. Gleichzeitig entsteht die bereits erwähnte glänzende Beschichtung.

Die Backzeit richtet sich in aller Regel nach der Stärke des Backteiges und die Stärke des Backteiges wiederum nach der beabsichtigten Festigkeit des Einwegbehältnisses. Je dünner die Teigplattenteile 3 sind, desto kürzer ist die Backzeit.

Nach dem Backprozeß wird die gesamte Preßform aus dem Ofen entnommen und nach einer Abkühlzeit von ca. 30 Sekunden kann das fertige Einwegbehältnis aus der Preßform gestoßen werden. Dabei kühlt es endgültig auf Zimmertemperatur aus.

Das fertig gebackene Einwegbehältnis weist eine relativ hohe Festigkeit auf. Es kann halbflüssige Salate, Suppen oder Süßspeisen aufnehmen, ohne daß es in kurzer Zeit durchweicht. Somit wird es beispielsweise möglich, halbflüssige Salate einzufüllen, ohne daß diese das Einwegbehältnis in einer Zeit von 5 bis 6 Stunden oder länger durchweichen.

Das Einwegbehältnis ist einerseits voll verrottbar, kann andererseits jedoch auch der Futtermittelindustrie zusammen mit nicht vollständig verzehrten Nahrungsmitteln zugeführt werden. Dabei ist eine gute ökologische Verträglichkeit erreicht.

**Verfahren zur Herstellung eines Einwegbehältnisses und Preßform zur Durchführung des Verfahrens**

**Bezugszeichenliste**

1 Teigplatte
2 Ausstechform
3 Teigplattenteil
4 Unterform
5 Rand
6 Innenbereich
7 Dampfaustrittsöffnung
8 Oberform
9 Beschwerungsstück

**Patentansprüche**

**1.** Verfahren zur Herstellung eines Einwegbehältnisses aus unter Verwendung von Getreidemehl hergestellten Teig, der geformt und anschließend gebacken wird, **dadurch gekennzeichnet**, daß der Teig als Festteig

- mit einem Wassermasseanteil A von

$$A_{min} = 30\% \leq A \leq 35\% = A_{max}$$

- mit einem Masseanteil B einer Getreidemehlmischung aus Weizen- und Roggenmehl, für den gilt

$$B \approx 50\%,$$

wobei sich darin ein Masseanteil $B_W$ an Weizenmehl und ein Masseanteil $B_R$ an Roggenmehl zueinander verhält wie $1\% \leq B_W \leq 49\%$ und $B_R = 50\% - B_W$,

- mit einem Masseanteil C an Mehl aus zerkleinertem getrockneten Backwerk, wie Semmelmehl für den gilt

$$C \approx 10\%,$$

und

- mit einem Masseanteil D an Pflanzenöl, für den gilt

$$D \approx A_{max} - A + 5\%,$$

geknetet und als Teigrohling (1) in eine Preßform (4; 8) eingebracht wird und in dieser Preßform (4; 8) gebacken wird.

2. Verfahren nach Anspruch 1, **dadurch gekennzeichnet**, daß dem Teig Geschmacks- und/oder Farbstoffe zugesetzt werden.

3. Verfahren nach Anspruch 1 oder 2, **dadurch gekennzeichnet**, daß gilt

$$B_W \approx B_R.$$

4. Verfahren nach einem der Ansprüche 1 bis 3, **gekennzeichnet durch** folgende Masseanteile

A = 34,9%
$B_W = B_R = 24,9\%$
C = 10,0%
D = 5,0%
und einem Masseanteil E an Kochsalz von 0,3%.

5. Verfahren nach einem der Ansprüche 1 bis 4, **dadurch gekennzeichnet**, daß der Teigrohling als Teigplatte (1) geformt und ein Teil (3) dieser Teigplatte (1) in eine Preßform (4; 8) gegeben wird.

6. Verfahren nach einem der Ansprüche 1 bis 4, **dadurch gekennzeichnet**, daß der Teigrohling als Teig kugel in die Preßform (4; 8) gegeben und durch Zusammenfügen der Preßform (4; 8) geformt wird.

7. Verfahren nach einem der Ansprüche 1 bis 6, **dadurch gekennzeichnet**, daß der Preßdruck in der Preßform (4; 8) während des gesamten Backvorganges konstant gehalten wird.

8. Verfahren nach einem der Ansprüche 1 bis 7, **dadurch gekennzeichnet**, daß die Preßform (4; 8) durch Schwerkraft gepreßt wird.

9. Verfahren nach einem der Ansprüche 1 bis 8, **dadurch gekennzeichnet**, daß die mit Teig gefüllte Preßform (4; 8) in einen Umluftherd gegeben und bei annähernd 200° C 20 bis 30 Minuten gebacken wird.

10. Verfahren nach einem der Ansprüche 1 bis 8, **dadurch gekennzeichnet**, daß die Preßform (4; 8) direkt beheizt wird und damit ein Kontaktbackvorgang 2 bis 6 Minuten durchgeführt wird.

11. Verfahren nach einem der Ansprüche 1 bis 10, **dadurch gekennzeichnet**, daß unter Verwendung einer mikrowellenfesten Preßform die mit Teig gefüllte Preßform (4; 8) zum Backen oder zur Unterstützung des Backprozesses einer Mikrowellenstrahlung ausgesetzt wird.

12. Verfahren nach einem der Ansprüche 1 bis 11, **dadurch gekennzeichnet**, daß das Einwegbehältnis nach dem Backvorgang mit einer wasserabweisenden Beschichtung versehen wird.

13. Preßform zur Durchführung des Verfahrens nach einem der Ansprüche 1 bis 12, **gekennzeichnet durch** eine eine Inversform der Unterseite des Einwegbehältnisses aufweisende Unterform (4) und eine eine Inversform der Oberseite des Einwegbehältnisses aufweisende Oberform (8), die unter Zwischenlegen des Teigrohlings (3) auf die Unterform auflegbar ist und daß die Unterform (4) zumindest in einem randfernen Innenbereich (6) Dampfaustrittsöffnungen (7) aufweist.

14. Preßform nach Anspruch 13, **dadurch gekennzeichnet**, daß die Oberform (8) mit einem Beschwerungsstück (9), daß mindestens das fünffache Gewicht der Oberform (8) aufweist, versehen ist.

## Claims

1. Process for producing a disposable container from dough which is produced using grain flour and is shaped and then baked, characterized in that the dough, in the form of a firm dough

   - having a percentage by mass of water A of

   $$A_{min} = 30\% \leq A \leq 35\% = A_{max}$$

   - having a percentage by mass B of a grain-flour mixture of wheat flour and rye flour, for which

   $$B \approx 50\%,$$

   in which a percentage by mass $B_W$ of wheat flour and a percentage by mass $B_R$ of rye flour relate to one another as follows:

   $$1\% \leq B_W \leq 49\% \text{ and } B_R = 50\% - B_W,$$

   - having a percentage by mass C of flour comprising comminuted dried baked products, such as breadcrumbs, for which

   $$C \approx 10\%,$$

   and
   - having a percentage by mass D of vegetable oil, for which

   $$D \approx A_{max} - A + 5\%,$$

   is kneaded and introduced into a press mould (4; 8) as a dough preform (1) and baked in this press mould (4; 8).

2. Process according to Claim 1, characterized in that flavouring agents and/or colouring agents are added to the dough.

3. Process according to Claim 1 or 2, characterized in that

   $$B_W \approx B_R.$$

4. Process according to one of Claims 1 to 3, characterized by the following percentages by mass

   A = 34.9%
   $B_W = B_R$ = 24.9%

   C = 10.0%
   D = 5.0%
   and a percentage by mass E of salt of 0.3%.

5. Process according to one of Claims 1 to 4, characterized in that the dough preform is shaped as a dough sheet (1) and a part (3) of this dough sheet (1) is introduced into a press mould (4; 8).

6. Process according to one of Claims 1 to 4, characterized in that the dough preform is introduced into the press mould (4; 8) as a dough ball and is shaped by the press mould (4; 8) being joined together.

7. Process according to one of Claims 1 to 6, characterized in that the moulding pressure in the press mould (4; 8) is kept constant throughout the baking operation.

8. Process according to one of Claims 1 to 7, characterized in that the press mould (4; 8) is pressed by the force of gravity.

9. Process according to one of Claims 1 to 8, characterized in that the dough-filled press mould (4; 8) is introduced into a circulating-air oven and is baked at approximately 200°C for 20 to 30 minutes.

10. Process according to one of Claims 1 to 8, characterized in that the press mould (4; 8) is heated directly and a contact-baking operation is thus carried out for 2 to 6 minutes.

11. Process according to one of Claims 1 to 10, characterized in that, using a microwave-safe press mould, the dough-filled press mould (4; 8) is exposed to microwave radiation for the baking or for assisting the baking process.

12. Process according to one of Claims 1 to 11, characterized in that the disposable container is provided with a water-repellent coating following the baking operation.

13. Press mould for carrying out the process according to one of Claims 1 to 12, characterized by a bottom mould (4), which has the inverse shape of the underside of the disposable container, and a top mould (8), which has the inverse shape of the top side of the disposable container and can be positioned on the bottom mould with the dough preform (3) located therebetween, and in that the bottom mould (4) has steam-outlet openings (7) at least in an inner region (6) remote from its border.

14. Press mould according to Claim 13, characterized in that the top mould (8) is provided with a weighting element (9) which is at least five times the weight of the top mould (8).

**Revendications**

1. Procédé de production d'un récipient à usage unique à base de pâte produite en utilisant de la farine de céréales qui est moulé et ensuite cuite, caractérisé en ce que
la pâte est malaxée sous forme de pâte solide :

   • ayant une proportion en masse d'eau A de

   $$A_{min} = 30\ \% \leq A \leq 35\ \% = A_{max}$$

   • ayant une proportion en masse B d'un mélange de farines de céréales à base de farine de blé et de farine de seigle pour lequel s'applique

   $$B = 50\ \%$$

   • dans lequel une proportion en masse $B_W$ en farine de blé et une proportion en masse $B_R$ en farine de seigle se comporte l'une pour l'autre comme

   $$1\ \% \leq B_W \leq 49\ \% \text{ et } B_R = 50\ \% - B_W$$

   • ayant une proportion en masse C en farine pour pâtisserie broyée, séchée comme de la farine pour petits pains pour laquelle s'applique

   $$C = 10\ \%$$

   • et avec une proportion en masse D en huile végétale pour laquelle s'applique

   $$D = A_{max} - A + 5\ \%$$

   et la pâte est introduite sous forme d'une galette de pâte (1) dans un moule (4 ; 8) et est agglomérée dans ce moule (4 ; 8).

2. Procédé selon la revendication 1,
caractérisé en ce qu'
on ajoute à la pâte des arômes artificiels et/ou des colorants.

3. Procédé selon la revendication 1 ou 2,
caractérisé en ce que
s'applique $B_W = B_R$.

4. Procédé selon l'une des revendications 1 à 3,
caractérisé par
les proportions en masse suivantes :

   A = 34,9 %
   $B_W = B_R$ = 24,9 %
   C = 10,0 %
   D = 5,0 %
   et une proportion en masse E en sel de cuisine de 0,3 %.

5. Procédé selon l'une des revendications 1 à 4,
caractérisé en ce que
la galette de pâte est moulée en forme de plaque de pâte (1) et une partie (3) de cette plaque de pâte (1) est introduite dans un moule (4 ; 8).

6. Procédé selon l'une des revendications 1 à 4,
caractérisé en ce que
la galette de pâte est introduite sous forme de gâteau de pâte dans le moule (4 ; 8) et est moulée par assemblage du moule (4 ; 8).

7. Procédé selon l'une des revendications 1 à 6,
caractérisé en ce que
la pression de pressage dans le moule (4 ; 8) peut être maintenue constante pendant tout le processus de cuisson.

8. Procédé selon l'une des revendications 1 à 7,
caractérisé en ce que
le moule (4 ; 8) est comprimé par la force de gravité.

9. Procédé selon l'une des revendications 1 à 8,
caractérisé en ce que
le moule (4 ; 8), rempli par de la pâte, est mis dans un foyer à circulation d'air et est cuit à environ 200°C pendant 20 à 30 minutes.

10. Procédé selon l'une des revendications 1 à 8,
caractérisé en ce que
le moule (4 ; 8) est chauffé directement et ainsi un processus de cuisson par contact est effectué pendant 2 à 6 minutes.

11. Procédé selon l'une des revendications 1 à 10,
caractérisé en ce que
tout en utilisant un moule résistant aux micro-ondes, le moule rempli de pâte (4 ; 8) est exposé à un rayonnement de micro-ondes pour la cuisson ou pour renforcer le processus de cuisson.

12. Procédé selon l'une des revendications 1 à 11,
caractérisé en ce que
le récipient à usage unique, après le processus de cuisson, est pourvu d'un revêtement hydrofuge.

13. Moule pour l'exécution du procédé selon l'une des revendications 1 à 12,

caractérisé en ce qu'il comprend

- un demi-moule inférieur (4) qui possède une forme inverse de la face inférieure du récipient à usage unique, et un demi-moule supérieur (8) qui possède une forme inverse de la partie supérieure du récipient à usage unique, qui peut être posé en intercalant la galette de pâte (3) sur le demi-moule inférieur, et
- le demi-moule inférieur (4) possède au moins dans une zone interne (6) éloignée du bord, des orifices pour la sortie de la vapeur (7).

**14.** Moule selon la revendication 13,
caractérisé en ce que
le demi-moule supérieur (8) est équipé d'une pièce d'alourdissement qui possède au moins un poids quintuple de demi-moule supérieur (8).

Fig. 1

Fig. 2

Fig. 3

Fig. 4